Europäisches Patentamt

European Patent Office

Office européen des brevets

(19)

(11) Publication number: **0 238 722 B1**

# EUROPEAN PATENT SPECIFICATION

(45) Date of publication of patent specification: **27.11.91**

(51) Int. Cl.⁵: **A01K 1/00**, A01K 31/00, F24F 7/00

(21) Application number: **86116601.5**

(22) Date of filing: **28.11.86**

(54) **Animal husbandry housing.**

(30) Priority: **26.03.86 US 844416**

(43) Date of publication of application:
**30.09.87 Bulletin 87/40**

(45) Publication of the grant of the patent:
**27.11.91 Bulletin 91/48**

(84) Designated Contracting States:
**DE FR GB NL**

(56) References cited:
**DE-A- 2 501 037**
**GB-A- 1 048 737**
**US-A- 2 335 173**
**US-A- 4 241 871**

(73) Proprietor: **Koozer, Howard D.**
**2061 Highway 20**
**Sedro-Woolley Washington 98284(US)**

(72) Inventor: **Koozer, Howard D.**
**2061 Highway 20**
**Sedro-Woolley Washington 98284(US)**

(74) Representative: **Schönherr, Wolfgang et al**
**Patentanwälte Wolfgang Schönherr Dipl.-Ing.**
**Karl-Heinz Serwe Hawstrasse 28**
**W-5500 Trier(DE)**

Rank Xerox (UK) Business Services

## Description

The present invention relates to housing used in animal husbandry, and particularly to housing adapted for confining small warm-blooded caged animals such as poultry.

The structures shown in the U.S. patents discussed briefly below are representative of prior attempts to provide an optimum environment for animal husbandry:

Burgert U.S. Patent No. 323,782, issued August 4, 1885, discloses a square chicken house having a central top air inlet-outlet and tiers of nesting boards mounted on inclined partitions.

Scott U.S. Patent No. Re12,513, reissued July 24, 1906, discloses vertically-spaced tiers of cages mounted at opposite sides of a hollow vertical support.

Cornell U.S. Patent No. 2,257,734, issued October 7, 1941, discloses a husbandry system in which tiers of cages are moved in a path past feeding, watering and cleaning stations, for example.

Corey U.S. Patent No. 2,335,173, issued November 23, 1943, discloses a complicated ventilation system for a poultry house having opposing tiers of cages.

Bayer U.S. Patent No. 3,062,184, issued November 6, 1962, discloses a system for drying manure which has fallen from cages.

Fleshman U.S. Patent No. 3,994,260, issued November 30, 1976, discloses cages which can be hung from upright columns to form vertically spaced tiers.

Sutton, Jr., U.S. Patent No. 4,428,278, issued January 31, 1984, discloses mechanism for emergency ventilation of a poultry house.

Truhan U.S. Patent No. 4,151,811, issued May 1, 1979, discloses a poultry house having a plurality of rooms and mechanism for progressively moving the poultry sequentially through the different rooms.

Newell, III et al., U.S. Patent No. 4,241,871, issued December 30, 1980, discloses an animal enclosure in which a flow of ventilating air is assured by maintaining a desired difference between the barometric pressure within the enclosure and that outside the enclosure.

German Offenlegungsschrift 25 01 037, published August 21, 1975, in the name of VEG Kombinat Luft-und Kältetechnik, discloses animal housing having rows of cages stacked in tiers and spaced apart widthwise of a room with mechanism for inducing airflow within the room.

The present invention as claimed in claim 1 provides animal husbandry housing including a substantially closed building having an elongated room with solid, substantially air-impervious upright sidewalls, a generally horizontal ceiling and a floor, tiers of cages for the animals mounted adjacent to at least one of the sidewalls but spaced outward therefrom and above the floor so as to leave a substantially unobstructed passage between such one adjacent sidewall and the tiers of cages and below the tiers of cages above the floor, the ceiling having a multiplicity of separate vent apertures spaced apart lengthwise of the room, the room normally being in communication with the exterior of the building by means of the ceiling vent apertures, an exhaust opening in the upper portion of the room, fan means for expelling air from the room through the exhaust opening so as to draw air from the exterior of the building into the room through the ceiling vent apertures, which apertures are out of registration with the tiers of cages, and vent door means for closing and opening the ceiling vent apertures, characterized by the tiers of cages being positioned between the ceiling vent apertures and such adjacent sidewall such that there is an unobstructed passage from the vent apertures downward to the floor at the side of the tiers of cages remote from such sidewall and in open communication with the passage below the tiers of cages, and means for coordinating opening and closing of said vent door means with operation of the fan means so as to maintain the room at a negative pressure sufficient that air is injected into the room as jets through the ceiling vent apertures which jets are out of registration with the tiers of cages.

The present invention as claimed in claim 9 also provides the method of introducing outside fresh air into animal husbandry housing having an elongated room with substantially air-impervious upright sidewalls, a generally horizontal ceiling, a floor, tiers of cages for the animals adjacent to at least one of the sidewalls but spaced outward therefrom and upward from the floor forming an unobstructed upright passage between such sidewall and such tiers of cages and a lower unobstructed passage in communication with such upright passage, such ceiling having vent apertures therein which apertures are out of registration with the tiers of cages, and vent door means for closing and opening the ceiling vent apertures, which method includes operating fan means for expelling air from the room through an exhaust opening in the upper portion of said room so as to draw outside fresh air through the vent apertures in the ceiling, characterized in that the method includes coordinating opening and closing of said vent door means with operation of the fan means so as to maintain the room at a negative pressure sufficient that outside fresh air is injected into the room as jets through the ceiling vent apertures which jets are out of registration with the tiers of cages, the tiers of cages being positioned between the ceiling vent apertures and such adjacent sidewall such that there is an unobstructed passage from the vent apertures downward to the floor at the side of the cage remote from such sidewall and in open communication with the passage below the tiers of cages. Preferred features of the invention are set out in the dependent claims.

One way of carrying out the invention is described in detail below with reference to drawings which illustrate one specific embodiment, in which:

Figure 1 is a somewhat diagrammatic top perspective of animal husbandry housing in accordance with the present invention;

Figure 2 is a fragmentary top perspective of a portion of the housing of Figure 1 with parts broken away;

Figure 3 is a somewhat diagrammatic horizontal section along line 3--3 of Figure 1;

Figure 4 is a somewhat diagrammatic transverse vertical section along line 4--4 of Figure 1;

Figure 5 is a somewhat diagrammatic fragmentary vertical section along line 5--5 of Figure 1;

Figure 6 (on the drawing sheet with Figure 4) is a fragmentary, enlarged, detail end elevation of a portion of the interior of the housing, namely, one of the vent doors and its surrounding structure, with parts shown in section;

Figure 7 (on the drawing sheet with Figure 3) is a schematic representation of the mechanism for opening the vent doors; and

Figure 8 is a schematic diagram of the exhaust fan, ventilation and lighting control system that can be used with the housing of Figure 1.

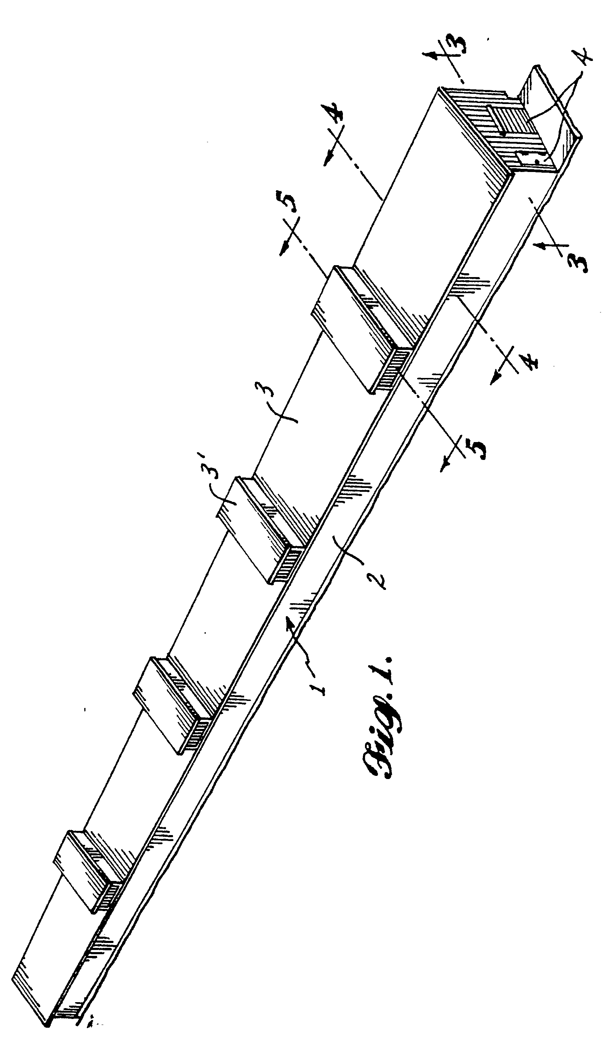

As shown in Figure 1, the preferred animal husbandry housing in accordance with the present invention is an elongated closed building 1 with conventional foundation and framing. The outer walls 2 and inclined roof 3, including the raised roof portions 3', can have conventional sheet metal siding and roofing as is commonly used in farm buildings, insulated only as required to prevent substantial condensation within the building. Preferably there are access doors 4 in both ends but no windows.

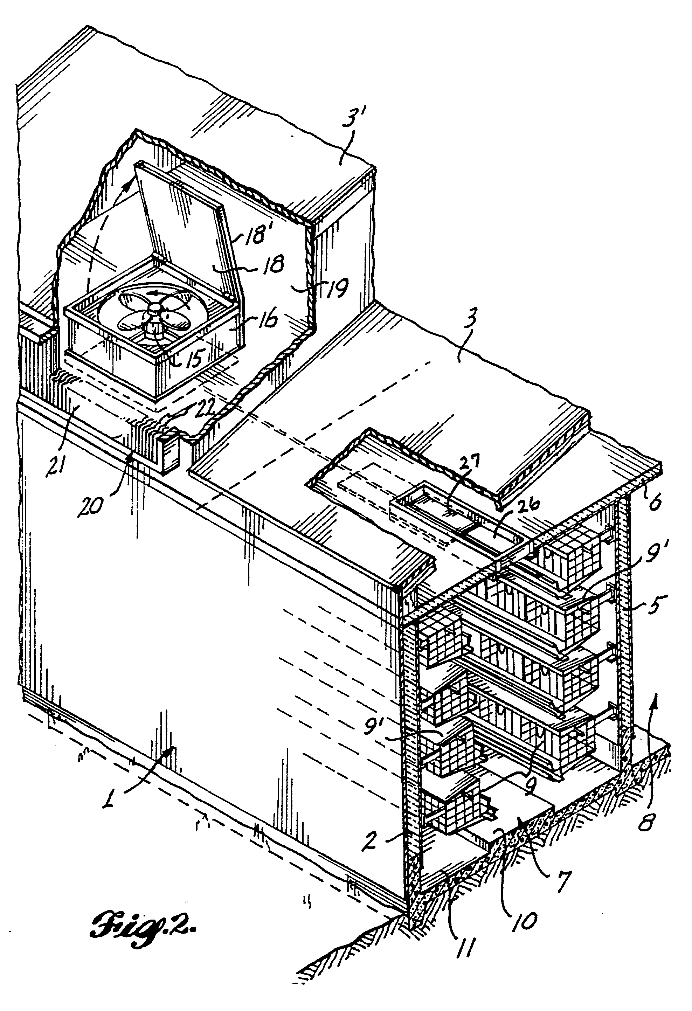

The building 1 can have a single animal rearing or tending room extending longitudinally of the building or, as seen in Figure 2, one or more longitudinally extending partitions or walls 5 can divide the building into two or more elongated rooms. The representative embodiment shown in the drawings has a single central wall 5 dividing the central portion of the building into two elongated rooms 7 and 8, respectively. Within each room vertically spaced tiers of cages 9 are supported adjacent to the longitudinal walls of the room. The cages are of wire mesh construction having a mesh bottom through which the chicken manure or droppings may pass. Each tier of cages except the top tier has a continuous sheet top 9' inclined downward and outward toward the adjacent wall to prevent the manure from passing into the next lower cages. In each room there is a central walkway 10 between the opposing tiers of cages. Preferably, the walkway is raised above the remainder of the floor 11.

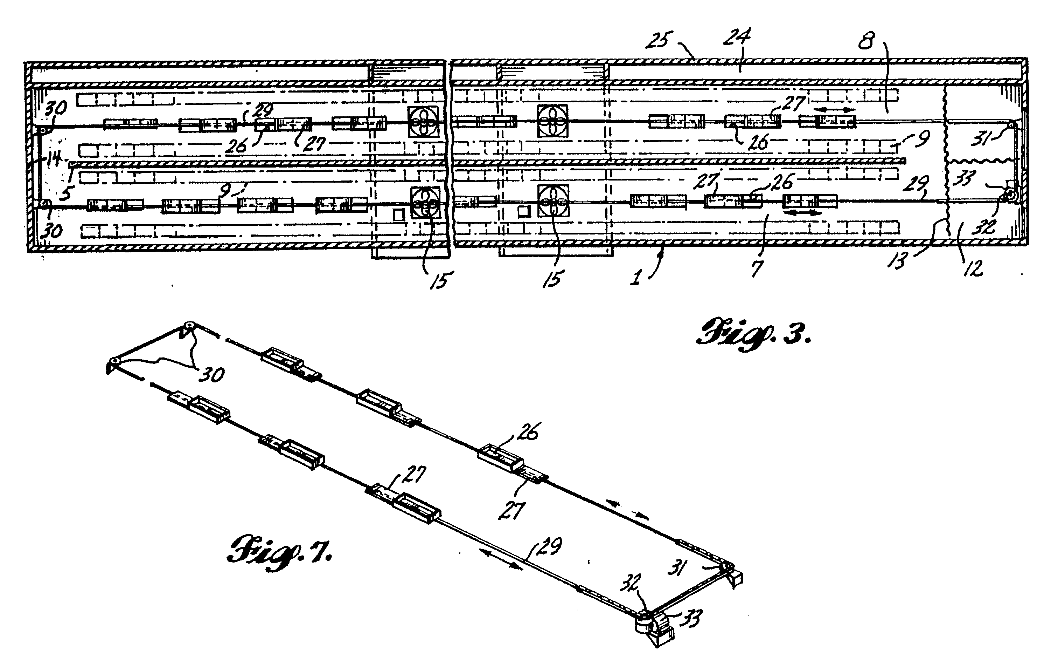

The general layout of the building is best seen in Figures 3, 4 and 5. The dimensions can vary through a wide range but in the representative embodiment shown the inside dimensions of each room are about 260 feet (79.3 meters) by about 8 feet (2.4 meters) with a ceiling 6 about 9 1/2 feet (2.85 meters) above the floor. Two such rooms are sufficient to accommodate about 16,000 laying hens--1,000 for each of the 16 tiers--producing an average of about 11,500 eggs per day for human consumption. As seen in Figure 3, at one end of the building there is a service and storage room 12 separated from the cage-containing rooms 7 and 8 by an opaque curtain 13 or by a wall. The far end of the central partition or wall 5 can be spaced inward from the far end wall 14 of the building. There is cross ventilation between the two rooms at both ends.

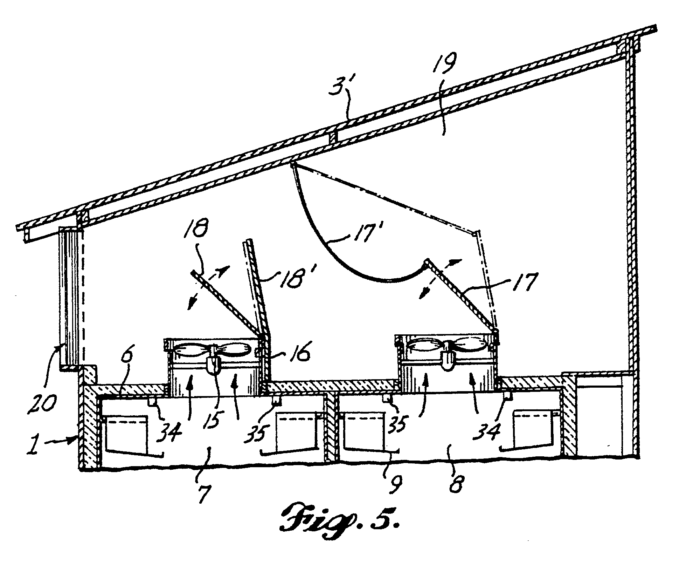

In each of the rooms there are high-volume exhaust fans 15 mounted in rectangular frames 16 recessed in the ceiling and registered with the raised sections 3' of the roof as seen in Figure 5. Such raised roof sections are substantially evenly distributed along the length of the building. In the representative embodiment shown, the raised sections can be spaced about 62 feet (18.9 meters) on center, the endmost sections being spaced about one-half that distance from the adjacent ends of the cage-containing rooms. Each raised section can be about 12 feet (3.6 meters) long and about 5 feet (1.5 meters) higher than the longer, lower sections of the roof. The raised sections are sealed from the remainder of the attic to form exhaust plenums 19 that communicate with the exterior of the building only through the large windows or exhaust openings 20 at one side of the building.

Each of the frames 16 has a light-weight, insulated door 17 or 18 at the top. The doors are normally closed to seal the room below from the plenums 19. When a fan is actuated its door is blown open. As seen in Figure 5, for the fans remote from the exhaust openings 20, opening of the doors 17 is limited by cords 17' connected between the swinging ends of the doors and the roof 3'. The frames 16 for the fans at the other side of the building--adjacent to the opening 20--have stationary inclined deflector plates 18' at the inner sides of the frames to prevent air blown by the other fans from interfering with opening of the doors 18. The deflector plates also limit opening of the doors 18 so that no cords are required.

As seen in Figure 2, to minimize the light entering through the exhaust openings 20 and into the rooms when one or more of the exhaust fans are running--which would interfere with varied lighting schedules requiring darkness during daylight hours--a conventional light trap panel 21 can be used, such as the panel available from Acme Engineering and Manufacturing Corp. of Muskogee, Oklahoma, U.S.A. Such panels have closely spaced upright blinds 22 of serpentine cross section to limit entry of light without unduly interfering with the passage of air between the blinds.

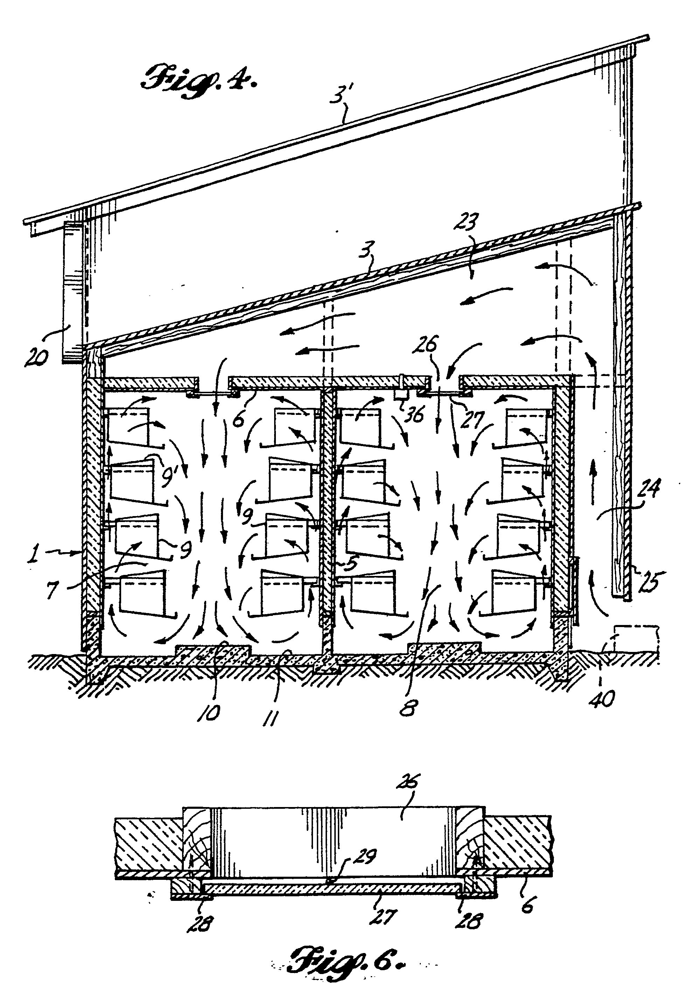

As best seen in Figure 4, between the raised roof sections 3' which form the exhaust plenums, the attic area 23 above the horizontal ceiling 6 is in communication with the exterior of the building by way of a continuous inlet air plenum 24 formed between a double outer wall along one side of the building. The bottom of the outermost wall or baffle 25 is spaced above the ground and extends upward to the roof. In the representative embodiment the inlet air plenum can be about 2 feet (0.6 meter) wide and the attic 23 can average about 2 feet (0.6 meter) in height.

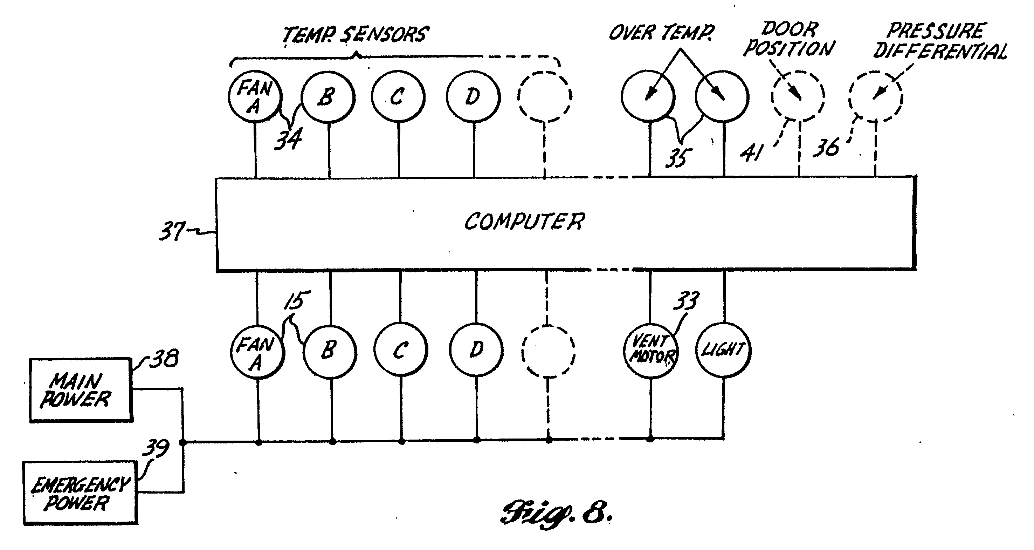

The ceiling 6 of each room has narrow vent openings or apertures 26 each elongated lengthwise of its room. The vent apertures are regularly spaced through the long ceiling sections beneath the attic vent areas 23. The effective size of each vent aperture 26 is adjusted by sliding a door 27 which, as seen in Figure 6, has its opposite longitudinal margins resting on inward-projecting lips 28 supported from the ceiling 6. In a representative installation, the vent apertures are about 13 inches (33.02 cm) wide by about 48 inches (121.92 cm) long and are spaced about 48 inches (121.92 cm) apart, that is, as close together as possible so that a door in its full open position does not obstruct an adjacent aperture.

As best seen in Figures 3 and 7, a single continuous cable 29 extends lengthwise through one of the rooms close to the ceiling and is attached to each of the vent doors 27 in that room, then around pulleys 30 at the far end wall 14 and back through the outer room where it is secured to each of the vent doors in that room. At the near end of the building the cable extends around another pulley 31 to a sprocket 32 driven by a motor 33. The motor can be actuated to slide all of the doors simultaneously so as to enlarge or lessen the effective open areas of all of the vent apertures to the same extent.

For moderate temperatures between about -10° F. (-23° C.) and about 80° F. (26.7° C.) operation of the exhaust fans 15 and the motor 33 controlling the positions of the vent doors 27 is coordinated to maintain a substantially constant temperature in the rooms 7 and 8. For tending laying hens, such temperature would be within the range of about 70° F. (21.1° C.) to about 80° F. (26.7° C.). Each of the exhaust fans can have a temperature sensor diagrammatically represented at 34 in Figure 5 which actuates its fan if a temperature slightly in excess of the desired temperature is sensed and turns off its fan if a temperature slightly less than the predetermined temperature is sensed. In a representative embodiment the temperature sensor actuates its fan as required to maintain the temperature at 80° F. (26.7° C.) plus or -0.4° F. (-17.5° C.). Preferably each fan is actuated independently of the other fans. Also, in case of a malfunction in the sensing equipment or one or more fans, preferably there is a temperature sensor 35 located centrally of each room which will actuate all of the fans if a temperature approaching a dangerous temperature is reached. For laying hens the emergency temperature for actuation of all fans could be 95° F (35° C.).

Opening of the vent doors 27 is coordinated with operation of the exhaust fans so that a desired negative pressure is maintained in the rooms 7 and 8, preferably .01 to .03 inch (0.254 mm to 0.762 mm) of water less than outside pressure. One way in which this can be accomplished is by use of a differential pressure sensor 36 diagrammatically illustrated in Figure 4 which measures the difference in pressure between one of the rooms and the low attic area above that room. Such differential pressure sensor can control the motor 33 for opening and closing the vent doors to maintain the pressure within the desired range. In a representative embodiment the motor is not actuated, that is, the doors are maintained in their then existing positions, if the pressure in the room is between about .01 inch (0.254 mm) of water and about .03 inch (0.762 mm) of water below the attic pressure. If the pressure difference is less than about .01 inch (0.254 mm) of water the motor is actuated to begin closing the doors, and if the pressure difference is greater than about .03 inch (0.762 mm) of water the motor is actuated to begin opening the doors. In the illustrated embodiment there is cross ventilation between the rooms at both ends of the rooms and all doors are moved simultaneously and to the same extent. For a room length greater than about 450 feet (137.2 meters) the doors within each room should be actuated independently of the doors of each of the other rooms and the rooms would be substantially sealed from each other, although they can share the common attic and the common exhaust plenums. A separate differential pressure sensor would be required for each room.

The air circulation pattern with the vent doors open or partially open is indicated by the arrows in Figure 4. The beneficial aspect of maintaining room pressure below attic pressure is that fresh air is injected into the rooms substantially as jets which flow substantially straight down between the opposing tiers of cages 9 until the jets are turned abruptly toward the walls of the room at the walkway 10. The jets pass below the lowermost tier of cages which is spaced above the floor 11 at a distance at least about 1 foot (0.3 meter). For a larger number of tiers the spacing of the bottom tier above the floor would be increased. There is almost turbulent mixing of the injected fresh air with room air as the flow is forced outward below the bottom tiers, then up along the solid walls behind the cages and then over and through the cages. To maintain a substantially uniform flow of air through the vertically spaced tiers, the cages are spaced outward from the solid sheet wall behind them and the spacing of each tier from the adjacent wall is greater for the lower tiers than for the upper tiers. Consequently the air flow is metered so that approximately the same volume of air flows through each tier. In a representative embodiment the top tier can be spaced outward about 2 inches (5.08 cm) from the adjacent wall and each lower tier can be spaced from the adjacent wall about 2 inches (5.08 cm) more than the next higher tier. This metered circular air flow pattern results in all hens having substantially the same temperature environment.

The generally circular air flow pattern along the sides of the rooms also quickly dries manure or droppings which collect on the boards 9' and floor 11. Another beneficial aspect of the preferred air flow pattern is that the abrupt turning of the injected fresh air jets at the walkway 10 results in a substantial portion of dust and other electrostatic particulate matter being deposited on the walkway rather then remaining suspended in the air.

One of the more critical design considerations is the extent to which the vent doors will be opened with only a single fan running. The size, particularly the width, of the ventilation apertures 26 and the extent to which the vent doors 27 must be sufficient that fresh air flows into the room as the desired jets which will flow substantially to the walkway 10. Providing separate, spaced, narrow openings of a width several times less than their length and no greater than about one-half the minimum spacing between opposing tiers assures a sufficient opening of the doors to energize the desired circular air flow pattern, as compared, for example, to a larger number of apertures with the doors open only slightly such that the jet is dissipated toward the top of the room by mixing with room air before reaching the walkway. For a given size and spacing of the ventilation apertures the differential pressure range can be adjusted to obtain the desired air flow pattern. Too little pressure difference between the room and the attic results in dissipation of the jet before it reaches the walkway, whereas too great a pressure difference can result in undesirable uneven cooling within the room.

The upright inlet plenum 24 conducts air into the attic area 23 from close to the ground, assuring that the coldest possible air is supplied into the rooms. In the northern hemisphere, preferably the building is oriented with the inlet plenum on the shadier northern side. The long upright inlet plenum 24 also limits the amount of light introduced into the rooms when the vent doors are opened. Preferably the inlet plenum and the exhaust openings 20 are located on opposite sides of the building to minimize recirculation of exhausted stale room air back into the inlet plenum.

For laying hens the capacity of the exhaust fans is selected so that with all fans running the air circulation is at least 5 cubic feet (.1415 cubic meter) per hen per minute to assure sufficient cooling in warm weather. For outside temperatures below about -10° F. (-23° C.) some supplemental heating may be required. For sustained outside temperatures above about 85° F. (29.4° C.) some supplemental cooling may be required. As seen in Figure 4, supplemental cooling can be accomplished by evaporative cooling pads 40 at the fresh air inlet below the outer wall or baffle 25.

The improved housing in accordance with the present invention is adaptable to automatic control by computer as diagrammatically represented in Figure 8. The separate temperature sensors 34 for the exhaust fans 15 can be connected to a computer 37 which monitors the temperature in the area of each fan. The computer can monitor the differential pressure and control the vent door motor 33 accordingly, and also can monitor an emergency over temperature condition by use of the auxiliary temperature sensors 35 mounted centrally of each room. In addition to a primary or main power source 38 there should be an auxiliary or emergency power source 39 in case of failure of the main source. Otherwise, considering the high density of the animals being raised or tended, even a fairly short power outage could cause substantial damage. The computer also can control the building lighting as well as any other automatic equipment.

For an alternative control system tests could be conducted to determine the required positions of the vent doors depending on the number of fans that are running and the desired pressure difference between the rooms and the attic. The computer 37 could monitor the position of the doors as diagrammatically indicated at 41 in Figure 8 and be programmed to actuate the vent door motor or motors to position the doors in predetermined positions as a function of actuation of the fans. For example, tests of an embodiment approximately corresponding to the embodiment shown in the drawings have established that the doors open approximately 2 inches (5.08 cm) with one fan running and progressively greater but substantially constant distances for each additional fan in operation.

Regardless of the details of the control system used, the improved housing in accordance with the present invention provides a uniform temperature environment for the animals being raised or tended with excellent air quality and in a form adaptable to advanced automated equipment and modern management techniques.

## Claims

1. Animal husbandry housing including a substantially closed building (1) having an elongated room (7 or 8) with solid, substantially air-impervious upright sidewalls (2, 5), a generally horizontal ceiling (6) and a floor (10, 11), tiers of cages (9) for the animals mounted adjacent to at least one of the sidewalls (2 or 5) but spaced outward therefrom and above the floor (10, 11) so as to leave a substantially unobstructed passage between such one adjacent sidewall (2 or 5) and the tiers of cages (9) and below the tiers of cages (9) above the floor (10, 11), the ceiling (6) having a multiplicity of separate vent apertures (26) spaced apart lengthwise of the room (7 or 8), the room (7 or 8) normally being in communication with the exterior of the building (1) by means of the ceiling vent apertures (26), an exhaust opening in the upper portion of the room (7 or 8), fan means (15) for expelling air from the room (7 or 8) through the exhaust opening so as to draw air from the exterior of the building (1) into the room (7 or 8) through the ceiling vent apertures (26), which apertures are out of registration with the tiers of cages (9), and vent door means (27) for closing and opening the ceiling vent apertures (26), characterized by the tiers of cages (9) being positioned between the ceiling vent apertures (26) and such adjacent sidewall (2 or 5) such that there is an unobstructed passage from the vent apertures (26) downward to the floor (10, 11) at the side of the tiers of cages (9) remote from such sidewall (2 or 5) and in open communication with the passage below the tiers of cages (9), and means (29, 30, 31, 32, 33, 36) for coordinating opening and closing of said vent door means (27) with operation of the fan means (15) so as to maintain the room (7 or 8) at a negative pressure sufficient that air is injected into the room (7 or 8) as jets through the ceiling vent apertures (26) which jets are out of registration with the tiers of cages (9).

2. The housing defined in claim 1, further characterized by the coordinating means (29, 30, 31, 32, 33, 36) maintaining the room (7 or 8) at a negative pressure sufficient that the jets of air injected into the room (7 or 8) through the ceiling vent apertures (26) flow substantially straight down at the side of the tiers of cages (9) remote from the adjacent sidewall (2 or 5) until the jets are turned abruptly at the floor (10, 11) for mixing of the injected air with room air adjacent to the floor (10, 11) prior to flow into the passage between such sidewall (2 or 5) and the tiers of cages (9).

3. The housing defined in claim 1 or claim 2, further characterized by an exhaust plenum (19) above the ceiling (6) and communicable with the room (7 or 8) through the exhaust opening, and an inlet plenum (23, 24) separate from said exhaust plenum (19), above the ceiling (6) and communicable with the room (7 or 8) through the vent apertures (26), said exhaust plenum (19) being open to ambient air at one side of the building (1) and said inlet plenum (23, 24) being open to ambient air at the opposite side of the building (1).

4. The housing defined in any preceding claim, further characterized by each tier of cages (9) except the top tier having a continuous sheet top (9'), air being circulated over the manure or droppings which collect on the continuous sheet tops (9').

5. The housing defined in any preceding claim, further characterized by the room (7 or 8) having tiers of cages (9) for the animals arranged in opposing orientation at opposite sides of the room (7 or 8) adjacent to the sidewalls (2, 5), respectively, spaced apart transversely of the room (7 or 8) and forming therebetween an unobstructed central walkway (10) below the vent apertures (26).

6. The housing defined in any of claims 1 through 4, further characterized by each tier of cages (9) below the top tier being spaced outward from the adjacent sidewall (2 or 5) a distance greater than the tier above it such that the width of the passage behind the cages (9) tapers upward to meter the volume of airflow to be approximately uniform through the different tiers of cages (9).

7. The housing defined in any preceding claim, further characterized by the vent apertures (26) being elongated lengthwise of the room (7 or 8), each of said apertures (26) being at least several times longer than it is wide, the vent door means including a door (27) for each aperture (26) slidable lengthwise thereof to alter the effective open area of its aperture (26).

8. The housing defined in claim 7, further characterized by the coordinating means including means (29, 30, 31, 32, 33) for adjusting the effective open area of all of the vent apertures (26) simultaneously and to the same extent.

9. The method of introducing outside fresh air into animal husbandry housing having an elongated room (7 or 8) with substantially air-impervious upright sidewalls (2, 5), a generally horizontal ceiling (6), a floor (10, 11), tiers of cages (9) for the animals adjacent to at least one of the sidewalls (2 or 5) but spaced outward therefrom and upward from the floor (10, 11) forming an unobstructed upright passage between such sidewall (2 or 5) and such tiers of cages (9) and a lower unobstructed passage in communication with such upright passage, such ceiling having vent apertures (26) therein which apertures are out of registration with the tiers of cages (9), and vent door means (27) for closing and opening the ceiling vent apertures (26), which method includes operating fan means (15) for expelling air from the room (7 or 8) through an exhaust opening in the upper portion of said room (7 or 8) so as to draw outside fresh air through the vent apertures (26) in the ceiling (6), characterized in that the method includes coordinating opening and closing of said vent door means (27) with operation of the fan means (15) so as to maintain the room (7 or 8) at a negative pressure sufficient that outside fresh air is injected into the room (7 or 8) as jets through the ceiling vent apertures (26) which jets are out of registration with the tiers of cages (9), the tiers of cages (9) being positioned between the ceiling vent apertures (26) and such adjacent sidewall (2 or 5) such that there is an unobstructed passage from the vent apertures (26) downward to the floor (10, 11) at the side of the cage (9) remote from such sidewall and in open communication with the passage below the tiers of cages (9).

10. The method defined in claim 9, further characterized by coordinating opening and closing of the vent door means (27) with operation of the fan means (15) to maintain the room at a negative pressure sufficient that the jets pass down at the side of the tiers of cages (9) remote from the adjacent sidewall (2 or 5) until the jets are turned abruptly at the floor (10, 11) for mixing of the outside fresh air with room air adjacent to the floor prior to flow into the upright passage between the adjacent sidewall (2 or 5) and the tiers of cages (9).

**Revendications**

1. Local pour élevage d'animaux comportant un bâtiment (1) substantiellement fermé ayant une salle allongée (7 ou 8) avec des parois latérales (2, 5) verticales, substantiellement imperméables à l'air, un plafond (6) généralement horizontal et un plancher (10, 11), des rangées de cages (9) pour les animaux, montées adjacentes à au moins l'une des parois (2 ou 5), mais écartées de cette dernière vers l'extérieur et par rapport au plancher (10, 11) de manière à laisser un passage substantiellement libre entre l'une de ces parois latérales adjacentes (2 ou 5) et les rangées de cages (9) d'une part, et d'autre part au-dessous des rangées de cages (9) au-dessus du plancher (10, 11), le plafond (6) présentant une multiplicité d'ouvertures de ventilation séparées (26) espacées dans le sens de la longueur de la salle (7 ou 8) qui est normalement en communication avec l'extérieur du bâtiment (1) au moyen des ouvertures de ventilation (26) du plafond, une ouverture d'évacuation dans la partie supérieure de la salle (7 ou 8), des moyens de ventilation (15) pour extraire l'air de la salle (7 ou 8) à travers l'ouverture d'évacuation de façon à faire pénétrer de l'air de l'extérieur du bâtiment (1) dans la salle (7 ou 8) à travers les ouvertures de ventilation (26) du plafond, lesquelles ne sont pas alignées avec les rangées de cages (9) et des dispositifs à registre de ventilation (27) pour fermer et ouvrir les ouvertures de ventilation (26) du plafond, caractérisé en ce que les rangées de cages (9) sont disposées entre les ouvertures de ventilation (26) du plafond et par rapport à la paroi latérale correspondante (2 ou 5) de telle manière qu'il subsiste un passage libre allant des ouvertures de ventilation (26) vers le bas jusqu'au plancher (10, 11) à côté des rangées de cages (9) loin de ladite paroi (2 ou 5) et en libre communication avec le passage situé en dessous des rangées de cages (9) et en ce qu'il existe des moyens (29, 30, 31, 32, 33, 36) pour coordonner l'ouverture et la fermeture desdits dispositifs (27) à registre de ventilation avec le fonctionnement des moyens de ventilation (15), de manière à maintenir la salle (7 ou 8) à une pression négative suffisante pour que l'air soit injecté dans la salle (7 ou 8) en jets à travers les ouvertures de ventilation (26) du plafond, jets qui ne sont pas alignés avec lesdites rangées de cages (9).

2. Local suivant la revendication 1, caractérisé en outre en ce que les moyens de coordination (29, 30, 31, 32, 33, 36) maintiennent la salle (7 ou 8) à une pression négative suffisante pour que les jets d'air injectés dans la salle (7 ou 8) par les ouvertures de ventilation (26) du plafond s'écoulent substantiellement en ligne droite vers le bas à côté des rangées de cages (9) loin de la paroi adjacente (2 ou 5) jusqu'à ce que lesdits jets soient renvoyés brutalement par le plancher (11) afin qu'ainsi l'air éjecté se mélange avec l'air de la salle adjacent au plancher (10, 11) avant de s'écouler dans le passage situé entre la paroi latérale (2 ou 5) et les rangées de cages (9).

3. Local suivant l'une quelconque des revendications 1 ou 2, caractérisé en outre par un espace de tranquilisation de sortie (19) situé au-dessus du plafond (6) et pouvant communiquer avec la salle (7 ou 8) à travers l'ouverture d'évacuation et un espace de tranquilisation d'entrée (23, 24) différent de l'espace (19) situé au-dessus du plafond (6) et pouvant communiquer avec la salle (7 ou 8) à travers les ouvertures de ventilation (26), ledit espace de sortie (19) étant ouvert à l'air ambiant sur un côté du bâtiment (1) et ledit espace d'entrée (23, 24) étant ouvert à l'air ambiant sur le côté opposé du bâtiment (1).

4. Local suivant l'une quelconque des revendications qui précèdent, caractérisé en ce que chaque rangée de cages (9) à l'exception de la rangée supérieure possède une plaque d'ouverture continue (9'), l'air pouvant circuler au-dessus du fumier ou des égouttures qui s'accumulent sur la plaque de couverture continue (9').

5. Local suivant l'une quelconque des revendications qui précèdent, caractérisé en ce que la salle (7 ou 8) présente des rangées de cages (9) pour les animaux, respectivement disposées en vis-à-vis sur les côtés opposés de la salle (7 ou 8) et adjacentes aux parois latérales (2, 5) transversalement écartées les unes des autres dans la salle (7 ou 8) pour former entre elles un passage central (10) libre en dessous des ouvertures de ventilation (26).

6. Local suivant l'une quelconque des revendications 1 à 4, caractérisé en outre en ce que chaque rangée de cages (9) en dessous de la rangée supérieure est écartée de la paroi latérale (2 ou 5) d'une plus grande distance que la rangée immédiatement au-dessus, de manière que la largeur du passage derrière les cages aille en diminuant vers le haut afin de limiter progressivement le débit du courant d'air pour le rendre approximativement uniforme à travers les différentes rangées de cages (9).

7. Local suivant l'une quelconque des revendications qui précèdent, caractérisé en outre en ce que les ouvertures de ventilation (26) sont allongées dans le sens de la longueur de la salle (7 ou 8), chacune desdites ouvertures (26) étant au moins plusieurs fois plus longue que large et les dispositifs à registre de ventilation comportant un registre (27) pour chacune des ouvertures (26) qui coulisse dans le sens de la longueur de celles-ci afin de modifier la section effective de passage de cette ouverture (26).

8. Local suivant la revendication 7 qui précède, caractérisé en outre en ce que les moyens de coordination comportent des moyens (29, 30, 31, 32, 33) d'ajuster simultanément et de la même quantité les surfaces effectives de passage de toutes les ouvertues de ventilation (26).

9. Procédé pour introduire de l'air frais de l'extérieur dans un local pour animaux, constitué par une salle (7 ou 8) allongée ayant des parois latérales (2, 5) substantiellement imperméables à l'air, un plafond (6) généralement horizontal, un plancher (10, 11), des rangées de cages (9) pour les animaux, adjacentes à au moins l'une des parois latérales (2 ou 5) mais écartées de cette dernière du côté de l'extérieur du plancher (10, 11) vers le haut pour former un passage libre vers le haut entre lesdites parois (2 ou 5) et lesdites rangées de cages (9) et un passage inférieur libre en communication avec ledit passage vers le haut, ledit plafond présentant des ouvertures de ventilation (26), lesquelles ouvertures ne sont pas alignées avec les rangées de cages (9) et des dispositifs à registre de ventilation (27) pour fermer et ouvrir les ouvertures de ventilation (26) du plafond, procédé qui comprend l'actionnement de moyens de ventilation (15) pour extraire de l'air de la salle (7 ou 8) à travers une ouverture d'évacuation située dans la partie supérieure de ladite salle (7 ou 8) de manière à faire pénétrer de l'air frais de l'extérieur à travers les ouvertures de ventilation (26) du plafond (6), caractérisé en ce que ce procédé comporte une coordination entre ouverture et fermeture desdits dispositifs à registre de ventilation (27) avec le fonctionnement desdits moyens de ventilation (15), de manière à maintenir la salle (7 ou 8) à une pression négative suffisante pour que de l'air frais de l'extérieur soit injecté dans la salle (7 ou 8) en jets traversant les ouvertures de ventilation (26) du plafond, lesquels jets ne sont pas alignés avec les rangées de cages (9) qui sont disposées entre les ouvertures de ventilation (26) du plafond et une telle paroi latérale adjacente (2 ou 5), de telle façon qu'il subsiste un passage libre allant des ouvertures de ventilation (26) vers le bas jusqu'au plancher (10, 11) à côté de la cage (9) loin d'une telle paroi latérale et en libre communication avec le passage situé en dessous des rangées de cages (9).

10. Procédé suivant la revendication 9, caractérisé en outre en ce que l'ouverture et la fermeture des dispositifs à registre de ventilation (27) sont coordonnées avec le fonctionnement des moyens de ventilation (15) pour maintenir la salle à une pression négative suffisante pour que les jets descendent vers le bas à côtés des rangées des cages (9) loin de la paroi latérale (2 ou 5) jusqu'à ce que ces jets soient brutalement renvoyés par le plancher (10, 11) afin que l'air frais de l'extérieur se mélange avec l'air du local adjacent au plancher avant de s'écouler vers le haut dans le passage situé entre la paroi latérale adjacente (2 ou 5) et les rangées de cages (9).

## Patentansprüche

1. Stall für Tierzucht, bestehend aus einem im wesentlichen geschlossenen Gebäude (1), das einen langestreckten Raum (7 oder 8) mit festen, im wesentlichen luftundurchlässigen, aufrechten Seitenwänden (2, 5), eine im allgemeinen horizontale Decke (6), einen Boden (10, 11) und Reihen von Käfigen (9) für die Tiere aufweist, wobei die Käfige mindestens mit einer der Seitenwände (2 oder 5) aneinander grenzend befestigt aber nach außen mit Abstand und auf dem Boden (10, 11) angeordnet sind, um so einen im wesentlichen ungehinderten Durchgang zwischen der benachbarten Seitenwand (2 oder 5) und der Reihe von Käfigen (9) und unten der Reihe von Käfigen (9) über dem Boden (10, 11) zu lassen, wobei die Decke (6) eine Vielzahl von einzelnen Lüftungsöffnungen (26) aufweist, die im Abstand in Längsrichtung des Raumes (7 oder 8) angeordnet sind, wobei der Raum ( oder 8) normalerweise in Verbindung mit dem Äußeren des Gebäudes (1) durch Deckenlüftungsöffnungen (26) steht, eine Auslaßöffnung im oberen Teil des Raumes (7 oder 8) angeordnet ist, Lüfter (15) zum Ausstoßen der Luft von dem Raum (7 oder 8) durch die Auslaßöffnung so wie zum Einziehen von Luft von dem Äußeren des Gebäudes in den Raum (7 oder 8) durch die Deckenlüftungsöffnungen (26) vorgesehen sind, wobei die Öffnungen außerhalb der Anordnung der Reihen der Käfige (9) sind, und Lüftungstüren (27) zum Schließen und Öffnen der Deckenlüftungsöffnungen (26) angeordnet sind, dadurch gekennzeichnet, daß die Reihen der Käfige (9) zwischen den Deckenlüftungsöffnungen (26) und den benachbarten Seitenwänden (2 oder 5) so angeordnet sind, daß ein ungehinderter Durchgang von den Lüftungsöffnungen (26) nach unten zum Boden (10, 11) an der Seite der Reihen der Käfige (9) entfernt von der Seitenwand (2 oder 5) und in offener Verbindung mit dem Durchgang unter der Reihe der Käfige (9) gegeben ist und daß Mittel (29, 30, 31, 32, 33, 36) zur Koordinierung des Öffnens und Schließens der Lüftungstüren (27) bei Tätigkeit der Lüfter (15) angeordnet sind, um so den Raum (7 oder 8) bei einem negativen Druck zu halten, wobei die Luft in den Raum (7 oder 8) über Düsen durch die Deckenluftöffnungen (26) eingeführt wird, wobei die Düsen nicht in Übereinstimmung mit den Reihen der Käfige (9) angeordnet sind.

2. Stall nach Anspruch 1, dadurch gekennzeichnet, daß die Koordinationsmittel (29, 30, 31, 32, 33 und 36), die den Raum (7 oder 8) bei einem negativen Druck halten, derart ausgebildet sind, daß der Luftstrom, der in den Raum (7) oder (8) durch die Deckenlüftungsöffnungen (26) eingeführt wird, allgemein gerade nach unten an der Seite der Reihe der Käfige (9) fließt, die von der angrenzenden Seitenwand (2 oder 5) entfernt sind, bis der Luftstrom abrupt am Boden (10, 11) gedreht wird, um die eingeführte Luft mit der Raumluft am Boden (10, 11) zu mischen, ehe sie in den Durchgang zwischen der Seitenwand (2 oder 5) und der Reihe der Käfige (9) fließt.

3. Stall nach Anspruch 1 oder 2, dadurch gekennzeichnet, daß ein Exhausterraum (19) über der Decke (6) und verbindbar mit dem Raum (7 oder 8) durch die Auslaßöffnung angeordnet ist und daß ein Einlaßraum (23, 24) getrennt von dem Exhausterraum (19) über der Decke (6) und verbindbar mit dem Raum (7 oder 8) durch die Luftöffnungen (26) angeordnet ist, wobei der Exhausterraum (19) offen ist, um Luft an einer Seite des Gebäudes (1) einzuschließen und wobei der Einlaßraum (23, 24) offen ist, um Luft an der gegenüberliegenden Seite des Gebäudes (1) einzuschließen.

4. Stall nach einem der vorhergehenden Ansprüche, dadurch gekennzeichnet, daß jede Reihe von Käfigen (9), ausgenommen der obersten Reihe, eine durchgehende Deckplatte (9) aufweisen, damit Luft über dem Mist zirkuliert oder Tropfen auf den durchgehenden Deckplatten (9) gesammelt werden.

5. Stall nach einem der vorstehenden Ansprüche, dadurch gekennzeichnet, daß der Raum (7 oder 8) Reihen von Käfigen (9) für Tiere hat, die in entgegengesetzter Orientierung an den entgegengesetzten Seiten des Raumes (7 oder 8) den Seitenwänden (2, 5) benachbart angeordnet sind und die transversal im Abstand vom Raum (7 oder 8) angeordnet sind und zwischen sich einen ungehinderten mittleren Durchgang (10) unter den Luftöffnungen (26) bilden.

6. Stall nach einem der Ansprüche 1 bis 4, dadurch gekennzeichnet, daß jede Reihe der Käfige (9) unter der obersten Reihe im Abstand außen von der angrenzenden Seitenwand (2 oder 5) in einer Entfernung angeordnet ist, die größer als die darüberliegende Reihe ist, so daß die Breite des Durchganges hinter den Käfigen (9) sich aufwärts verjüngt, um das Volumen des Luftflusses zu begrenzen, um annähernd gleichmäßig durch die verschiedenen Reihen der Käfige (9) zu sein.

7. Stall nach einen der vorhergehenden Ansprüche, dadurch gekennzeichnet, daß die Lüftungsöffnungen (26) in Längsrichtung des Raumes (7 oder 8) langgestreckt sind, daß jede der Öffnungen (26) mindestens mehrere Male länger als ihre Breite ist und daß die Lüftungstür je eine Tür (27) für jede Öffnung (26) enthält, die in Längsrichtung verschiebbar ist, um den wirklichen Öffnungsbereich der Öffnung (26) zu ändern.

8. Stall nach Anspruch 7, dadurch gekennzeichnet, daß die Koordinationsmittel Mittel (29, 30, 31, 32, 33) zum Regeln des wirklichen Öffnungsbereiches von allen Luftöffnungen (26) gleichmäßig und im gleichen Ausmaß aufweisen.

9. Verfahren zum Einführen von außenseitiger Frischluft in einen Stall für Tiere, der einen langgestreckten Raum (7 oder 8) mit im wesentlichen luftundurchläsigen aufrechten Seitenwänden (2, 5), eine im allgemeinen horizontale Decke (6), einen Boden (10, 11) und Reihen von Käfigen (9) für die Tiere aufweist; wobei die Käfige mindestens einer der Seitenwände (2 oder 5) aber im Abstand außen davon und aufwärts vom Boden (10, 11) benachbart sind, um einen ungehinderten aufrechten Durchgang zwischen den Seitenwänden (2 oder 5) und den Reihen der Käfige (9) und einen unteren ungehinderten Durchgang in Verbindung mit dem aufrechten Durchgang zu bilden, wobei die Decke Lüftungsöffnungen (26) aufweist, die außerhalb der Übereinstimmung mit den Reihen der Käfige (9) sind, und eine Lüftungstür (27) zum Schließen und Öffnen der Deckenlüftungsöffnung (26) angeordnet ist, wobei das Verfahren die Tätigkeit von Lüftern (15) zum Ausstoßen von Luft von dem Raum (7 oder 8) durch eine Auslaßöffnung im oberen Teil des Raumes (7 oder 8) sowie zum Einziehen von außenseitiger Frischluft durch die Luftöffnungen (26) in der Decke (6) enthalten, dadurch gekennzeichnet, daß das Verfahren eine Koordinierung des Öffnens und Schließens der Lüftungstür (27) mit der Tätigkeit der Lüfter (15) enthält, um den Raum (7 oder 8) bei einem negativen Druck zu hlaten, so daß außenseitige Frischluft in den Raum (7 oder 8) als Luftstrom durch die Deckenlüftungsöffnungen (26) eingeführt wird, wobei der Luftstrom außerhalb der Übereinstimmung mit den Reihen der Käfige (9) sind und die Reihen der Käfige (9) zwischen den Deckenlüftungsöffnungen (26) und der angrenzenden Seitenwand (2 oder 5) derart angeordnet sind, daß ein ungehinderter Durchgang von den Lüftungsöffnungen (26) nach unten auf dem Boden (10, 11) an der Seite der Käfige (9) entfernt von der Seitenwand und in offener Verbindung mit dem Durchgang unter den Reihen der Käfige (9) gegeben ist.

10. Verfahren nach Anspruch 9, dadurch gekennzeichnet, daß das Öffnen und Schließen der Lüftungstür (27) bei Tätigkeit der Lüfter (15) koordiniert ist, um den Raum bei einem negativen Druck zu halten, so daß die Luftströme an der Seite der Reihe der Käfige (9) entfernt von der benachbarten Seitenwand (2 oder 5) durchgehen bis der Luftstrom abrupt am Boden (10, 11) gedreht wird, um die außenseitige Frischluft mit der Raumluft am Boden zu mischen, um in einem auf rechten Durchgang zwischen der angrenzenden Seitenwand (2 oder 5) und der Reihe der Käfige (9) zu fließen.

Fig. 1.

Fig.2.

Fig. 3.

Fig. 1.

*Fig. 4.*

*Fig. 6.*

*Fig. 5.*

PRESSURE DIFFERENTIAL

DOOR POSITION

OVER TEMP.

36

41

35

TEMP. SENSORS

FAN A

B

C

D

34

COMPUTER

37

LIGHT

VENT MOTOR

33

FAN A

B

C

D

15

38

MAIN POWER

39

EMERGENCY POWER

Fig. 8.

16